# EUROPÄISCHE PATENTSCHRIFT

(11) **EP 2 880 069 B1**
(45) Veröffentlichungstag und Bekanntmachung des Hinweises auf die Patenterteilung: **27.03.2019**
(21) Anmeldenummer: 13745614.1
(22) Anmeldetag: 25.07.2013
(51) Int. Cl.: C08G 18/10, C08G 18/40, C08G 18/50, C08G 18/63, C08G 18/65, C08G 18/66, C08L 75/02, C09D 175/02

(54) **POLYHARNSTOFF-ELASTOMERE MIT ERHÖHTER CHEMIKALIENBESTÄNDIGKEIT**
POLYUREA ELASTOMER HAVING INCREASED CHEMICAL RESISTANCE
ÉLASTOMÈRES DE POLYURÉE PRÉSENTANT UNE PLUS GRANDE RÉSISTANCE AUX PRODUITS CHIMIQUES

(30) Priorität: 06.08.2012 EP 12179380
(43) Veröffentlichungstag der Anmeldung: 10.06.2015
(73) Patentinhaber: BASF SE, 67056 Ludwigshafen am Rhein (DE)
(72) Erfinder: OTERO MARTINEZ, Iran, 32351 Stemwede (DE); PETROVIC, Dejan, 49080 Osnabrück (DE); TOMOVIC, Zeljko, 49448 Lemförde (DE)
(74) Vertreter: BASF IP Association
(86) Internationale Anmeldenummer: PCT/EP2013/065760
(87) Internationale Veröffentlichungsnummer: WO 2014/023583

(56) Entgegenhaltungen:
- EP-A2- 0 528 432
- EP-B1- 0 084 141

## Beschreibung

Die vorliegende Erfindung betrifft ein Verfahren zur Beschichtung von Oberflächen mit einem Polyharnstoff-Elastomeren, bei dem man (a) Polyisocyanate mit (b) Polyaminen, erhältlich durch katalytische Aminierung von Polyalkoholen, (c) gegebenenfalls Aminkettenverlängerer, enthaltend primäre- oder sekundäre Amingruppen, (d) gegebenenfalls Polyolen und (e) gegebenenfalls Hilfs- und Zusatzstoffe, zu einer Reaktionsmischung vermischt und die Reaktionsmischung auf die zu beschichtende Oberfläche aufträgt und aushärtet, wobei mindestens eine der Komponenten (a) bis (d) dispergierte Füllstoffpartikel enthält.

Polyharnstoffelastomere zeichnen sich insbesondere durch ihre hohe Widerstandsfähigkeit gegenüber Umwelteinflüssen, ihre hohe Chemikalienbeständigkeit und ihr schnelles Aushärten von oft nur wenigen Sekunden aus. Daher werden Polyharnstoffelastomere häufig als Beschichtungsmittel in stark belasteten Bereichen zum Schutz von Oberflächen eingesetzt. Ihre elastomeren Eigenschaften schützen den Untergrund vor mechanischer Beanspruchung, während ihre hohe Chemikalienbeständigkeit das darunter liegende Material vor chemischen Angriffen schützt. Typische Anwendungsgebiete von Polyharnstoff-Elastomere, insbesondere Polyharnstoff-Sprühelastomere, sind daher Beschichtungen, insbesondere für Betonreparatur und Wasserschutz (Dach-, Parkdeckbeschichtungen, Brücken-, Tunnelreparaturen), sogenanntes "Secondary Containment" (Coatings für Auffangbecken von Chemikalien-, Abwasser- oder Öltanks beziehungsweise Gefahrgutladezonen), Korrosionsschutz (Ladeflächen von Frachtschiffen, LKWs, Pick-Ups und Eisenbahnwaggons) oder sogenanntes "Primary Containment" (Abwasserschächte, Kläranlagen). Insbesondere in stark saurer Umgebung kann aber die Chemikalienbeständigkeit weiter verbessert werden. Dies kann beispielsweise durch den Einsatz von Polyharnstoffen, deren Ausgangsmaterialien mit Kohlenwasserstoffen modifiziert wurden, erreicht werden.

So beschreibt US 2008/0097068 den Einsatz von Caprolactonen zur Herstellung von Polyharnstoffelastomeren, um eine erhöhte Chemikalienbeständigkeit zu erreichen. Dabei sind allerdings die mechanischen Eigenschaften der erhaltenen Polyharnstoffelastomere auf relativ niedrigem Niveau.

Weiter beschreibt beispielsweise US 2011/0098417 den Einsatz von Polybutadiendiolen als Polymerbestandteil in der Polyaminkomponente als auch in der Isocyanatkomponente. Dies führt zu einer höheren Beständigkeit der Polyharnstoff-Elastomere gegenüber verschiedenen Säuren, Basen und Organische Lösungsmitteln. Polybutadiendiole sind aber teuer und nur schwer herzustellen. Außerdem erhöht der Einsatz der Polybutadiendiole die Viskosität in Polyamin bzw. Polyisocyanatkomponente, wodurch die Komponenten zur Herstellung der Polyharnstoffe nur schwer zu verarbeiten sind. Schließlich sind auch die mechanischem Eigenschaften der erhaltenen Polyharnstoffelastomere noch zu verbessern.

WO 2010/039986 beschreibt aminfunktionalisierte Polyisobutene, die als Bestandteil der Polyaminkomponente zur Herstellung der Polyharnstoffelastomere eingesetzt werden, um eine höhere Chemikalienbeständigkeit zu erreichen. Auch aminfunktionalisierte Polyisobutene sind teuer und nur schwer herzustellen. Außerdem erhöht auch der Einsatz der aminfunktionalisierten Polyisobutene die Viskosität in der Polyaminkomponente, wodurch die Komponenten zur Herstellung der Polyharnstoffe nur schwer zu verarbeiten sind. Schließlich sind auch hier die mechanischen Eigenschaften der erhaltenen Polyharnstoffelastomere noch zu verbessern.

Aus EP 1112838 sind kompakte Polyurethanelastomere bekannt, die ausgehend von Polymerpolyolen erhalten wurden. Der Einfluss der Polymerpolyole auf die Chemikalienbeständigkeit dieser Polyurethanelastomere wurde nicht untersucht, insbesondere vor dem Hintergrund, dass Polyharnstoffelastomere prinzipiell eine höhere Chemikalienbeständigkeit aufweisen als Polyurethanelastomere.

EP 84841 beschreibt Polyharnstoffschaumstoffe und Polyharnstoffelastomere, ausgehend von Polyaminen mit endständigen, aromatischen Aminogruppen, die polymere auf Basis von radikalisch polymerisierten Monomeren enthalten. Gemäß EP 84841 sind aromatisch gebundene Amingruppen wesentlich dafür, dass ein brauchbares Polyharnstoffelastomer erhalten werden kann. Vergleichsbeispiel 9 zeigt den Versuch, ein Polyharnstoffelastomer ausgehend von einem aliphatischen Polyetheramin und einem Toluolbasierten Isocyanate zu erhalten. Dabei wird ein klebriges, wachsartiges und damit minderwertiges Produkt erhalten.

EP 528432 beschreibt Polyharnstoffharze für RIM-Verfahren, die Feststoffpartikel, erhältlich durch radikalische in-situ-Polymerisation von mindestens zwei ethylenisch ungesättigten Monomeren, wobei mindestens eines der ethylenisch ungesättigten Monomere ein monofunktionelles Acrylatmonomer, dessen Homopolymer eine Glastemperatur von unter -20 °C aufweist, ist, aufgeführt sind Acrylsäureester. Die führt zu Poyharnstoffelastomeren mit verbesserter Schlagfestigkeit bei niedrigen Temperaturen. Nachteilig ist, dass Acrylsäureester anfällig für Hydrolyse sind und daher nachteilig für eine hohe Chemikalienbeständigkeit sind.

Aufgabe der vorliegenden Erfindung war es daher, ein Verfahren zur Herstellung von Polyharnstoffelastomeren zu liefern, das einfach und kostengünstig durchgeführt werden kann, wobei die erhaltenen Polyharnstoffelastomere eine hohe Chemikalienbeständigkeit und gute mechanische Eigenschaften aufweisen.

Dabei wurde überraschenderweise gefunden, dass der Einsatz von dispergierten Füllstoffpartikeln in einer flüssigen Einsatzkomponente zur Herstellung der Polyharnstoffelastomere, beispielsweise in der gegenüber Isocyanaten reaktiven Komponente, insbesondere von Polymerpolyolen oder Polymerpolyaminen, die Chemikalienbeständigkeit von Polyurethanelastomeren und Polyharnstoffelastomeren verbessert werden kann

Insbesondere wird die vorliegende Aufgabe gelöst durch ein Verfahren zur Beschichtung von Oberflächen mit einem Polyharnstoff-Elastomeren, bei dem man (a) Polyisocyanate mit (b) Polyaminen, erhältlich durch katalytische Aminierung von Polyalkoholen, (c) gegebenenfalls Aminkettenverlängerer, enthaltend primäre- oder sekundäre Amingruppen, (d) gegebenenfalls Polyolen und (e) gegebenenfalls Hilfs- und Zusatzstoffe, zu einer Reaktionsmischung vermischt und die Reaktionsmischung auf die zu beschichtende Oberfläche aufträgt und aushärtet, wobei mindestens eine der Komponenten (a) bis (d) dispergierte Füllstoffpartikel enthält. Ebenfalls gelöst wird die erfindungsgemäße Aufgabe durch Polyharnstoffelastomere, die durch dieses Verfahren erhaltenen.

Polyharnstoffelastomere sind Reaktionsprodukte eines mindestens difunktionellen Isocyanats mit einem mindestens difunktionellen primären oder sekundären Amin. Polyharnstoffelastomere sind üblicherweise kompakte Polyharnstoffe. Dabei bedeutet kompakt, dass die Dichte der Polyharnstoffelastomere üblicherweise 800 bis 1500 g/L, vorzugsweise 850 bis 1300 g/L und insbesondere 900 bis 1200 g/L beträgt. Dabei zeigen erfindungsgemäße Polyharnstoff-Elastomere elastomere Eigenschaften, das heißt, sie weisen eine Zugfestigkeit nach DIN 53504 von mindestens 10 MPa, bevorzugt mindestens 12 MPa und insbesondere mindestens 15 MPa und eine Reißdehnung nach DIN 53504 von mindestens 100 % bevorzugt 150 bis 1000 % und insbesondere 200 bis 800 % auf. Dabei werden die Probekörper nach Herstellung und vor der Messung mindestens 24 Stunden bei 23 °C und 50 % relativer Luftfeuchtigkeit gelagert.

Als Polyisocyanate (a) können beliebige, zur Herstellung von Polyharnstoffelastomeren bekannte Polyisocyanate, enthaltend 2,4' Diphenylmethandiisocyanat und/oder 4,4'- Diphenylmethandiisocyanat, auch als 2,4-MDI und 4,4'-MDI bezeichnet, eingesetzt werden. Diese werden üblicherweise in Form von Prepolymeren eingesetzt. Dazu werden Isocyanate (a1) im Überschuss mit Polyolen (a2) und/oder Kettenverlängerern (a3) zum Isocyanatterminierten Prepolymeren umgesetzt. Vorzugsweise werden als Isocyanate (a1) 2,4' Diphenylmethandiisocyanat und/oder 4,4'- Diphenylmethandiisocyanat eingesetzt. Besonders bevorzugt umfassen die Isocyanate (a1) 2,4' Diphenylmethandiisocyanat und 4,4'- Diphenylmethandiisocyanat. Darüber hinaus können weitere, übliche Isocyanate, vorzugsweise aromatische Diisocyanate, insbesondere Toluylendiisocyanat, monomeres Diphenylmethandiisocyanat, wie 2,2' MDI oder höherkernige Homologe des Diphenylmethandiisocyanats, das Polymer-MDI, sowie Mischungen dieser Diisocyanate eingesetzt werden. Diphenylmethandiisocyanat kann auch als Mischung mit seinen Derivaten eingesetzt werden. Dabei kann Diphenylmethandiisocyanat besonders bevorzugt bis 10 Gew.-%, weiter besonders bevorzugt bis zu 5 Gew.-%, carbodiimid-, uretdion-, allophanat- oder uretoniminmodifiziertes Diphenylmethandiisocyanat, insbesondere carbodiimid modifiziertes Diphenylmethandiisocyanat, enthalten. Vorzugsweise werden neben 2,4' MDI und 4,4'-MDI nur difunktionelle Isocyanate eingesetzt. Vorzugsweise ist der Anteil von 2,4' MDI und 4,4'-MDI an den Isocyanaten (a1) größer als 60 Gew.-%, besonders bevorzugt größer als 80 Gew.-% und insbesondere größer als 98 Gew.-%. Dabei beträgt das Gewichtsverhältnis von 2,4' MDI zu 4,4'-MDI vorzugsweise 10 zu 90 bis 90 zu 10, besonders bevorzugt 30 zu 70 bis 70 zu 30 und insbesondere 40 zu 60 bis 60 zu 40.

Als Polyol (a2) werden übliche in der Polyurethanchemie bekannte Polyole eingesetzt. Polyole (a2) haben ein zahlenmittleres Molekulargewicht von größer 400 g/mol, vorzugsweise größer 550 g/mol, und können beispielsweise Polyetherole, Polyesterole oder Polycarbonatole sein, wobei die mittlere Funktionalität der Polyole vorzugsweise kleiner als 3 bis 1,7, besonders bevorzugt kleiner als 2,5 bis 1,9 und insbesondere kleiner als 2,1 bis 1,9 ist.

Polyetherole werden nach bekannten Verfahren hergestellt, beispielsweise durch anionische Polymerisation mit Alkalihydroxiden oder Alkalialkoholaten als Katalysatoren und unter Zusatz mindestens eines Startermoleküls, das 2 bis 3 gegenüber Isocyanatgruppen reaktive Wasserstoffatome gebunden enthält, oder durch kationische Polymerisation mit LewisSäuren, wie Antimonpentachlorid oder Borfluorid-Etherat aus einem oder mehreren Alkylenoxiden mit 2 bis 4 Kohlenstoffatomen im Alkylenrest. Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Weiter können als Katalysatoren auch Multimetallcyanidverbindungen, sogenannte DMC-Katalysatoren, eingesetzt werden. Die Alkylenoxide können einzeln, alternierend nacheinander oder als Mischungen verwendet werden. Bevorzugt werden Mischungen aus 1,2-Propylenoxid und Ethylenoxid, wobei das Ethylenoxid in Mengen von 10 bis 50 % als Ethylenoxid-Endblock eingesetzt wird ("EO-cap"), so dass die entstehenden Polyole zu über 70 % primäre OH-Endgruppen aufweisen.

Als Startermolekül kommen Wasser oder 2- und 3-wertige Alkohole, wie Ethylenglykol, 1,2- und 1,3-Propandiol, Diethylenglykol, Dipropylenglykol, 1,4-Butandiol, Glycerin oder Trimethylolpropan, vorzugsweise Ethylenglykol, 1,2- und 1,3-Propandiol, Diethylenglykol, Dipropylenglykol, Tripropylenglykol und 1,4-Butandiol in Betracht.

Die Polyetherpolyole, vorzugsweise Polyoxypropylen-polyoxyethylen-polyole, besitzen eine mittlere Funktionalität von 1,7 bis 3, besonders bevorzugt von 1,8 bis 2,5 und insbesondere von 1,9 bis 2,1 und Molekulargewichte von vorzugsweise 1.000 bis 12.000 g/mol, besonders bevorzugt von 1.400 bis 8.000 g/mol und insbesondere von 1.700 bis 6.000 g/mol. Vorzugsweise werden als Polyetherpolyole solche eingesetzt, die durch DMC-Katalyse, ausgehend von einem difunktionellen Starter, hergestellt wurden. Als Polyetherpolyole wird besonders bevorzugt Polytetrahydrofuran eingesetzt. Dabei beträgt die Funktionalität üblicherweise von 1,8 bis 3, bevorzugt von 1,9 bis 2,2 und besonders bevorzugt 1.95 bis 2,1 und das zahlenmittleren Molekulargewicht üblicherweise 500 bis 5000 g/mol, bevorzugt 750 bis 4000 g/mol, besonders bevorzugt 800 bis 2500 g/mol und insbesondere von 1500 bis 2200 g/mol.

Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. - Caprolacton oder Hydroxycarbonsäuren, z.B. -Hydroxycapronsäure.

Zur Herstellung der Polyesterpolyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a. in der Schmelze bei Temperaturen von 150 bis 250°C, vorzugsweise 180 bis 220°C, gegebenenfalls unter vermindertem Druck, bis zu der gewünschten Säurezahl, die vorzugsweise kleiner als 10, besonders bevorzugt kleiner als 2 ist, polykondensiert werden. Nach einer bevorzugten Ausführungsform wird das Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1 :1 bis 1,8, vorzugsweise 1 : 1,05 bis 1,2 polykondensiert.

Die erhaltenen Polyesterpolyole besitzen vorzugsweise eine Funktionalität von 1,8 bis 3, besonders bevorzugt von 1,9 bis 2,5 und insbesondere von 1,95 bis 2,1 und ein Molekulargewicht von 480 bis 5000, vorzugsweise 1000 bis 4500 g/mol und insbesondere 1600 bis 4500.

Als Polyole (a2) können beispielsweise Füllstoffhaltige Polyole eingesetzt werden. Diese Füllstoffhaltigen Polyoldispersionen werden auch als Polymerpolyole oder Graftpolyole bezeichnet. Solche füllstoffhaltigen Polyoldispersionen sind bekannt und deren Herstellung ist beispielsweise in "Mihail Ionescu, Chemistry and Technology of Polyols for Polyurethanes, Rapra Technology Ltd., 2005, ISBN: 185957-491-2), beschrieben.

Gegebenenfalls können der Umsetzung zum Polyisocyanatprepolymer noch Kettenverlängerungsmittel (a-3) zugegeben werden. Als Kettenverlängerungsmittel (a-3) für das Prepolymer sind zwei- oder dreiwertige Alkohole, beispielsweise Dipropylenglykol und/oder Tripropylenglykol, oder die Addukte von Dipropylenglykol und/oder Tripropylenglykol mit Alkylenoxiden, bevorzugt Dipropylenglycol, geeignet, vorzugsweise werden keine Kettenverlängerer (a3) zugegeben.

Alternativ können die beschriebenen Komponenten (a2) und (a3) auch ganz oder teilweise durch die jeweils unter Polyaminen (b) oder Aminkettenverlängerern (c) beschriebenen Verbindungen ersetzt werden.

Zur Herstellung des Isocyanatprepolymers werden Isocyanat (a1), Polyol (a2) und gegebenenfalls weitere Polyole, Kettenverlängerungsmittel und/oder Vernetzungsmittel vermischt. Dabei geschieht dies in einem Verhältnis, dass der NCO-Gehalt des Prepolymers mindestens 5 Gew.-%, vorzugsweise mindestens 7 Gew.-% und maximal 33 Gew.-%, besonders bevorzugt 10 bis 30 Gew.-%, weiter bevorzugt 12 bis 25 Gew.-% und insbesondere 14 bis 20 Gew.-% beträgt. Bevorzugt wird die Mischung auf Temperaturen von 30 bis 100 °C, besonders bevorzugt 50 bis 90 °C und insbesondere etwa 80 °C erwärmt.

In einer weiteren, bevorzugten Ausführungsform werden die Polyisocyanate (a1) auch direkt, ohne Umsetzung zum Prepolymer, als Polyisocyanate (a) eingesetzt.

Als Polyamine (b) wird mindestens ein, vorzugsweise eine Mischung aus mindestens zwei Polyoxyalkylenaminen, sogenannten Polyetheraminen, eingesetzt. Solche Polyoxyalkylenamine sind vorzugsweise aminterminierte di- beziehungsweise höherfunktionellen Polyalkylenoxide, in der Regel Polyoxyethylen- beziehungsweise Polyoxypropylenoxide, mit zahlenmittleren Molekulargewichten von mindestens 350 g/mol, beispielsweise zwischen 350 und 6000 g mol⁻¹, bevorzugt von 380 bis 5100 g mol⁻¹, wobei die Aminogruppe vorzugsweise aliphatisch gebunden ist. Möglich ist auch der Einsatz von aminterminiertem Polytetrahydrofuran (PTHF). Die Amingruppen der Polyetheramine sind bevorzugt primäre Amingruppen. Es kann auch nur ein einziges Polyetheramin verwendet werden. Die Polyetheramine (b) sind insbesondere Diamine oder Triamine. Derartige Verbindungen werden beispielsweise von der Firma Huntsman unter der Bezeichnung Jeffamine® bzw. von der Firma BASF als Polyetheramine unter dem Namen Baxxodur® vertrieben.

Polyamine (b) werden durch katalytische Aminierung der entsprechenden Polyalkohole hergestellt. Die Herstellung der Polyetheralkohole und Polyesteralkohole, die vorzugsweise aminiert werden, ist bereits oben bei der Beschreibung der Komponente (a2) offenbart. Insbesondere werden 2 oder 3-Funktionelle Polypropylenoxyde zu entsprechenden Di- oder Triaminen umgesetzt.

Als Füllstoffpartikel kommen alle verstärkend wirkenden Füllstoffe mit einem mittleren Teilchendurchmesser entlang der längsten Achse von 0,001 bis kleiner 100 µm, bevorzugt 0,01 bis 50 µm, besonders bevorzugt von 0,1 bis 10 µm und insbesondere 0,2 bis 3 µm in Betracht. Dabei kann die Teilchengrößenverteilung monomodal oder bi- bzw. multimodal sein. Vorzugsweise sind die Füllstoffteilchen im Wesentlichen kugelförmig und die längste Achse des Teilchens ist vorzugsweise nicht größer als das doppelte der kürzesten Achse. Füllstoffpartikel umfassen anorganische und organische Füllstoffe, die vorzugsweise in den Polyaminen (b) dispergierbar sind. Die anorganischen Partikel, können Halbmetalloxide, Metalloxide, beispielsweise Oxide der folgenden Metalle: Zn, Al, Si, Fe, Ti, B, Zr und V, Mischoxide, Carbide, Nitride, Carbonate, z.B. CaCO₃, Hydroxide, Kohlenstoff, wie Graphit, Graphen, Nano-Röhren , Ruß und/oder Fasern, anorganische Salze, anorganische Pigmente, Siliconharze, Silicone und/oder Silica, oder Mischungen daraus sein, wobei diese genannten Partikelklassen alle gegebenenfalls oberflächenmodifiziert, wie beispielsweise hydrophobisiert oder hydrophilisiert sein können. Zur Hydrophobisierung kann beispielsweise mindestens eine Verbindung aus der Gruppe der Silane, Siloxane, quaternären Ammoniumverbindungen, kationischen Polymere und Fettsäuren und deren Anionen eingesetzt werden.

Als anorganische Partikel können weiter verschiedene Silikat-Materialien eingesetzt werden. Hierfür können Silikat-Materialien verschiedener Herkunft verwendet werden, wie Silicasol, wobei Silica in Wasser, (Mono-)Alkohol oder in einem Polyol dispergiert sein kann, oberflächenfunktionalisierte Silicasole, Schichtsilikate oder pyrogene Kieselsäure. Beispiele für erfindungsgemäß einsetzbare, kommerziell erhältliche Silicat-Materialien sind Laponit®, Optigel®, Levasil® und Aerosil®.

Als organische Füllstoffe können beispielsweise Polymerpartikel eingesetzt werden. Dabei werden vorzugsweise thermoplastischen Polymere eingesetzt. Diese Füllstoffe liegen in der Reaktionsmischung dispergiert vor. Dabei liegen die Füllstoffe vorzugsweise bereits dispergiert in einer oder mehrerer der Komponenten (a) bis (d) vor, besonders bevorzugt in einer oder mehrerer der Komponenten (b) bis (d). Insbesondere liegen die Füllstoffpartikel dispergiert in den Polyaminen (b) vor.

Beispielsweise können die Füllstoffpartikel durch Dispergieren, gegebenenfalls unter Zuhilfenahme eines Stabilisators, oder durch Polymerisation von Monomeren, in eine oder mehrere der Komponenten (a) bis (d) eingebracht werden. Werden thermoplastische Polymerpartikel als Füllstoffpartikel eingesetzt, können diese auch in Form ihrer Schmelze in einer der Komponenten (a) bis (d), beispielsweise in der Isocyanatkomponente, dispergiert werden.

Sollen die Füllstoffe in den Isocyanaten dispergiert werden, können beispielsweise Füllstoffhaltige Polyole als Polyole (a2) eingesetzt werden. Diese Füllstoffhaltigen Polyoldispersionen werden auch als Polymerpolyole oder Graftpolyole bezeichnet. Solche füllstoffhaltigen Polyoldispersionen sind bekannt und deren Herstellung ist beispielsweise in "Mihail Ionescu, Chemistry and Technology of Polyols for Polyurethanes, Rapra Technology Ltd., 2005, ISBN: 185957-491-2), beschrieben.

Dispersionen von Polymerpartikeln in Polyaminen (b), auch als Polymerpolyamine oder Graftpolyamine bezeichnet, können durch radikalische Polymerisation der Monomere, gegebenenfalls eines oder mehrerer Stabilisatoren und gegebenenfalls eines oder mehrerer Makromere und gegebenenfalls eines oder mehrerer Moderatoren unter Einsatz eines Radikal-Initiators, meist Azo-oder Peroxidverbindungen alleine oder in Mischungen mit weiteren Initiatoren, in einem Polyetheramin beziehungsweise Polyesteramin als kontinuierliche Phase hergestellt werden. Das Polyetheramin oder das Polyesteramin, das die kontinuierliche Phase darstellt, wird häufig auch als Trägerpolyamin bezeichnet. Beispielhaft für die Herstellung von Polymerpolyaminen ist hier die Patentschrift US 4286074 genannt. Im Rahmen der Erfindung ist der Einsatz von Polymerpolyaminen besonders bevorzugt. Als Trägerpolyamine kommen alle unter b) beschriebenen Polyamine in Frage.

Geeignete ethylenisch ungesättigte Monomere für die Herstellung des Füllstoffanteils des Polymerpolyamins sind neben Styrol und Acrylnitril beispielsweise Butadien, Isopren, 1,4-Pentadien, 1,6-Hexadien, 1,7-Octadien, Styrol, Alpha-Methylstyrol, 2-Methylstyrol, 3-Methylstyrol, 4-Methylstyrol, 2,4-Dimethylstyrol, Ethylstyrol, Isopropylstyrol, Butylstyrol, Phenylstyrol, Cyclohexylstyrol, Benzylstyrol und ähnlichen Derivate; substituierte Styrole wie Cyanostyrol, Nitrostyrol, N,N-Dimethylaminostyrol, Acetoxystyrol, Methyl-4-Vinylbenzoat, Phenoxystyrol, p-Vinylphenyoxid und ähnliche Derivate und Mischungen davon; Acrylnitril, Acrylsäure, Methacrylsäure, , Methacrylnitril, Vinylmethylketon, Vinylethylketon, Vinylphenyketon, Vinylethylsulfon, N-methyl-N-vinylacetamid, N-vinylpyrrolidon, vinylimidazol, Dinvinylsulfoxid, Divinylsulfon, Natrium-vinylsulfonat, Methylvinylsulfonat, N-Vinylpyrrol, Vinylphosphonat, und ähnliche Derivate; Dimethylfumarat, Dimethylmaleat, Maleinsäure, Crotonsäure, Fumarsäure, Itaconsäure, Monomethylitaconat, Allylalkohol, Vinylpyridin und ähnlichen Derivaten und Mischungen davon. Bevorzugte ethylenisch ungesättigte Monomere sind Styrol, Acrylnitril, , und Mischungen davon.

In einer bevorzugten Ausführungsform werden als ethylenisch ungesättigte Monomere Acrylnitril, Styrol, insbesondere Styrol und Acrylnitril im Verhältnis zwischen 1:3 bis 3:1 verwendet. Bevorzugt wird weiterhin zur Polymerisation ein Makromer zugegeben. Gegebenenfalls wird die Polymerisation ferner unter Einsatz eines Moderators und unter Einsatz eines Radikal-Initiators durchgeführt.

Makromere sind lineare oder verzweigte Polyetheramine und/oder Polyole mit Molekulargewichten ≥ 1000 g/mol, die mindestens eine endständige, reaktionsfähige ethylenische ungesättigte Gruppe enthalten. Die ethylenisch ungesättigte Gruppe kann über Reaktion von Polyetheraminen und/oder Polyolen mit Carbonsäuren wie Acrylsäure, Carbonsäurehalogeniden wie Acrylsäurechlorid, Carbonsäure-Anhydriden, wie Maleinsäureanhydrid, Fumarsäure, Acrylat- und Methacrylat-derivaten, ethylenisch ungesättigten Epoxiden wie 1-Vinyl-cyclohexen-3,4-expoxid, 1-Butadienmonoxid, Vinylglycidylether, Glycidylmethacrylat und Allylglycidylether sowie Isocyanat-Derivaten, wie 3-Isopropenyl-1,1-dimethylbenzyl-Isocyanat (TMI®), Isocyanato-ethylmethacrylat, an ein bereits bestehendes Polyamin angefügt werden. Ein weiterer Weg ist die Herstellung eines Polyamins durch Alkoxylierung von Propylenoxid und Ethylenoxid unter Verwendung von Startmolekülen mit Hydroxylgruppen und einer ethylenischen Ungesättigtheit, wobei die endständige OH-Gruppe durch katalytische Aminierung zum Amin umgesetzt werden. Dabei ist es auch möglich, dass alle Makromere oder dass ein Teil der Makromere OH-Funktionalitäten anstelle von Aminfunktionalitäten aufweisen. Diese sind erhältlich, indem auf den Aminierungsschritt verzichtet wird oder eine ethylenisch ungesättigte Gruppe an ein bereits vorhandenes Polyol angefügt wird. Dabei erfolgt üblicherweise die Herstellung des Makromers unter Einsatz der ungesättigten Verbindung im Molaren Unterschuss, bezogen auf das Polyamin oder Polyol.

Stabilisatoren, die für die Herstellung von Dispersionen von Polymerpartikeln in Polyaminen (b) optional verwendet werden können, sind z.B. in dem Patent WO 2009/138379 beschrieben.

Agglomerieren der Partikel kann durch Einsatz von Makromeren verhindert werden. Während der radikalischen Polymerisation werden die Makromere, falls vorhanden, mit in die Polymerkette eingebaut. Dadurch bilden sich Copolymere mit Polyether- und beispielsweise Poly-Acrylnitril-Styrol-Blöcken, welche in der Grenzfläche von kontinuierlicher Phase und dispergierter Phase als Phasenvermittler wirken und das Agglomerieren der Polymerpartikel unterdrücken. Der Anteil der Makromere kann bis zu größer 90 Gew.-% betragen und beträgt üblicherweise 1 bis 60 Gew.-%, bevorzugt 1 bis 40 Gew.-% und besonders bevorzugt 1 bis 15 Gew.-%, jeweils bezogen auf das Gesamtgewicht der zur Herstellung des Polymerpolyamins eingesetzten Monomere. Auch die Pfropfreaktion von Trägerpolyol oder Trägerpolyetheramin mit radikalisch polymerisierendem Monomer führt zu einer Stabilisierung der Füllstoffpartikel.

Zur Herstellung von Polymerpolyaminen werden üblicherweise Moderatoren, auch als Kettenüberträger bezeichnet, eingesetzt. Die Moderatoren verringern durch Kettenübertragung des wachsenden Radikals das Molekulargewicht der sich bildenden Copolymere, wodurch die Vernetzung zwischen den Polymermolekülen verringert wird, was die Viskosität und die Dispersionsstabilität sowie die Filtrierbarkeit der Polymerpolyamine beeinflusst. Der Anteil der Moderatoren beträgt üblicherweise 0,5 bis 25 Gew.-%, bezogen auf das Gesamtgewicht der zur Herstellung des Polymerpolyamins eingesetzten Monomere. Moderatoren, die üblicherweise zur Herstellung von Polymerpolyaminen eingesetzt werden, sind Alkohole, wie 1-Butanol, 2-Butanol, Isopropanol, Ethanol, Methanol, Cyclohexan, Toluene, Mercaptane, wie Ethanthiol, 1-Heptanthiol, 2-Octanethiol, 1-Dodecanthiol, Thiophenol, 2-Ethylhexylthioglycolate, Methylthioglycolate, Cyclohexylmercaptan sowie Enoletherverbindungen, Morpholine und a-(Benzoyloxy)styren. Bevorzugt wird Alkylmercaptan verwendet.

Zur Initiierung der radikalischen Polymerisation werden üblicherweise Peroxid- und/oder Azo-Verbindungen, wie Dibenzoyl-peroxide, Lauroylperoxide, t-Amylperoxy-2-ethylhexanoate, Di-t-butylperoxide, Diisopropyl peroxide carbonate, t-Butyl peroxy-2-ethylhexanoate, t-Butylperpivalate, t-Butylperneo-decanoate, t-Butylperbenzoate, t-Butyl percrotonate, t-Butyl perisobutyrate, t-Butylperoxy-1-methylpropanoate, t-Butylperoxy-2-ethylpentanoate, t-Butylperoxyoctanoate und Di-t-butylperphthalate, 2,2'-Azobis(2,4-dimethyl-valeronitrile), 2,2'-Azobisisobutyronitrile (AIBN), Dimethyl-2,2'-azobisisobutyrate, 2,2'-Azobis(2-methylbutyronitrile) (AMBN), 1,1'-Azobis(1-cyclohexanecarbonitrile), eingesetzt. Der Anteil der Initiatoren beträgt üblicherweise 0,1 bis 6 Gew.-%, bezogen auf das Gesamtgewicht der zur Herstellung des Polymerpolyamins eingesetzten Monomere.

Die radikalische Polymerisation zur Herstellung von Polymerpolyaminen wird aufgrund der Reaktionsgeschwindigkeit der Monomere sowie der Halbwertszeit der Initiatoren üblicherweise bei Temperaturen von 70 bis 150°C und einem Druck bis zu 20 bar durchgeführt. Bevorzugte Reaktionsbedingungen zur Herstellung von Polymerpolyaminen sind Temperaturen von 80 bis 140°C bei einem Druck von Atmosphärendruck bis 15 bar.

Polymerpolyamine können in kontinuierlichen Verfahren, unter Einsatz von Rührkesseln mit kontinuierlichem Zu- und Ablauf, Rührkesselkaskaden, Rohrreaktoren und Loopreaktoren mit kontinuierlichem Zu- und Ablauf, oder in diskontinuierlichen Verfahren, mittels eines Batch Reaktors oder eines Semi-Batch Reaktors, hergestellt werden.

Die Reaktion zur Herstellung der Polymerpolyamine kann auch in Gegenwart eines inerten Lösungsmittels durchgeführt werden. Als Lösungsmittel können beispielsweise eingesetzt werden: Benzol, Toluol, Xylol, Acetonitril, Hexan, Heptan, Dioxan, Ethylacetat, N,N-Dimethylformamid, N,N-Dimethylacetamid, etc. Bevorzugt sind Benzol, Xylol und Toluol.

Alternativ können die dispergierten Füllstoffteilchen auch im sogenannten Schmelzemulgierverfahren erhalten werden. Dieses Verfahren ist in WO2009/138379 beschrieben. Dabei wird ein thermoplastisches Polymer, gegebenenfalls zusammen mit Stabilisator, und Polyamin (b) auf eine Temperatur oberhalb des Schmelzpunkts des thermoplastischen Polymers erwärmt, homogenisiert, beispielsweise mit Ultraschall, Extruder oder einer Zahnkranzdispergiermaschine und auf eine Temperatur unterhalb des Schmelzpunkts des thermoplastischen Polymers abgekühlt. Dabei können im Prinzip alle thermoplastischen Polymere eingesetzt werden. Vorzugsweise werden die thermoplastischen Polymere eingesetzt, die durch Polymerisation der oben genannten Monomere erhalten werden können. Gegebenenfalls wird weiter ein Emulgator zugegeben. Zum Beispiel, können die Stabilisatoren und Emulgatoren eingesetzt werden, die in WO 2009/138379 beschrieben sind.

In einer bevorzugten Ausführungsform ist das thermoplastische Polymer zum Einsatz im Schmelzemulgierverfahren ausgewählt aus der Gruppe, bestehend aus Polystyrol, Poly-(Styrol-co-Acrylnitril), Polyacrylnitril, Polyacrylat, Polymethacrylat, Polyolefine, wie z. B. Polypropylen, Polyethylen, Polyisobutylen, Polybutadien, Polyester, Polyamid, Polyvinylchlorid, Polyethylenterephthalat, Polyvinylacetat, Polyethylenglycol, Polyurethan, Polyharnstoff und Mischungen davon, bevorzugt bestehend aus Poly-(Styrol-co-Acrylnitril), Polyacrylnitril und Mischungen davon.

Vorzugsweise wird zur Herstellung des Polymerpolyamins ein difunktionelles Polyetheramin mit überwiegend primären Amingruppen und einem zahlenmittleren Molekulargewicht von mindestens 350 g/mol, beispielsweise zwischen 350 und 6000 g/mol, bevorzugt von 380 bis 5100 g/mol, als Trägerpolyamin verwendet.

In einer weiteren, bevorzugten Ausführungsform der Erfindung wird zur Herstellung des Polymerpolyamins aminiertes Polytetrahydrofuran (PTHF), üblicherweise mit einem zahlenmittleren Molekulargewicht von 300 bis 4000 g/mol, bevorzugt 750 bis 3000 g/mol, bevorzugt 800 bis 2500 g/mol, insbesondere von etwa 2000 g/mol als Trägerpolyamin eingesetzt.

In einer bevorzugten Ausführungsform enthält der Füllstoffanteil Acrylnitril, Styrol
und optional Makromer, wobei der Anteil an Acrylnitril 10 bis 75 Gew.-% und bevorzugt 25 bis 40 Gew.-%, der Anteil an Styrol 30 bis 90 Gew.-%, bevorzugt 55 bis 75 Gew.-% und der Anteil an Makromer 0 bis 30 Gew.-%, bevorzugt 3 bis 10 Gew.-%, bezogen auf das Gesamtgewicht des Füllstoffanteils des Polymerpolyamins, beträgt.

In einer bevorzugten Ausführungsform weist das Polymerpolyamin einen Füllstoffanteil von 10 bis 80 Gew.-%, besonders bevorzugt 25 bis 60 und insbesondere 35 bis 55 Gew.-%, bezogen auf das Gesamtgewicht des Polymerpolyamins, auf.

Der Füllstoffgehalt von Polymerpolyaminen errechnet sich aus dem prozentualen Verhältnis der eingesetzten Monomeren und des Makromeren, zu den eingesetzten Trägerpolyaminen und wird am fertigen Polymerpolyamin üblicherweise gravimetrisch aus dem prozentualen Verhältnis der Füllstoffmasse zu Gesamtmasse des Polymerpolyamins bestimmt.

Der Füllstoffgehalt, bezogen auf das Gesamtgewicht der Komponenten (a) bis (e), beträgt mindestens 0,5 Gew.-%. Vorzugsweise beträgt der Füllstoffgehalt 1 bis 30 Gew.-%, besonders bevorzugt 5 bis 27 Gew.-%, weiter bevorzugt 7 bis 25 Gew.-% und insbesondere 10 bis 22 Gew.-%, jeweils bezogen auf das Gesamtgewicht der Komponenten a) bis e). Dabei können auch Mischungen aus unterschiedlichen Füllstoffpartikeln eingesetzt werden.

Als Aminkettenverlängerer (c) werden aromatische und aliphatische Diamine mit einem Molekulargewicht von weniger als 350 g/mol und vorzugsweise 60 bis 250 g/mol eingesetzt. Der in Polyharnstoffelastomeren zumeist eingesetzte Kettenverlängerer ist Diethylentoluoldiamin (DETDA). Als im Vergleich zu aliphatischen Aminen unreaktivere Komponente determiniert DETDA das Aushärteverhalten des Systems. Entsprechend kann die Gelzeit durch alternative Kettenverlängerer mit gegenüber Isocyanaten herabgesetzter Reaktivität gesteuert werden. Um lichtstabile Polyharnstoff-Sprühelastomere zu erhalten, können auch aliphatische Kettenverlängerer eingesetzt werden. Darüber hinaus können die bereits aufgeführten alternativen aminischen Kettenverlängerer wie 4,4'-Methylenbis-(2,6-diethyl)-anilin (MDEA), 4,4'-Methylenbis-(2,6-diisopropyl)-anilin (MDIPA), 4,4'-Methylenbis-(3-chloro, 2,6-diethyl)-anilin (MCDEA), Dimethylthio-toluoldiamin (DMTDA, Ethacure® 300) oder reaktionsverzögernde Kettenverlängerer mit sekundären Aminfunktionen wie N,N'-Di(sec-butyl)-amino-biphenylmethan (DBMDA, Unilink® 4200) oder N,N'-Di-sec-butyl-p-phenylendiamin (Unilink® 4100) eingesetzt werden.

Weiter kann die Reaktionsmischung zur Herstellung der erfindungsgemäßen Polyharnstoffelastomere auch Polyole (d) enthalten. Diese umfassen sämtliche unter (a2) beschriebenen Polyole. Vorzugsweise beträgt der Anteil der Polyole (d) am Gesamtgewicht der Polyamine (b) und der Polyole (d) weniger als 50 Gew.-%, besonders bevorzugt weniger als 20 Gew.-%, weiter bevorzugt weniger als 10 Gew.-%. Insbesondere werden keine Polyole (d) eingesetzt. Dabei werden die Polyole (a2) nicht zur Berechnung des Anteils der Polyole (d) berücksichtigt.

Die Hilfs- und Zusatzstoffe umfassen Katalysatoren, oberflächenaktive Substanzen, Flammschutzmittel , Verstärkungsmittel, Haftvermittler, UV-Stabilisatoren, Antioxidanzien, Farbstoffe, Pigmente und Hydrolyseschutzmittel sowie fungistattischeund bakteriostatisch wirkende Substanzen. Dabei ist die Zugabe von Additiven zur Aminkomponente durch eine verarbeitbare Viskosität limitiert. Bevorzugte Additive sind Pigmente, Haftvermittler, UV-Stabilisatoren, Antioxidanzien und/oder Verstärkungsmittel. Diese Substanzen sind in der Polyurethan- und Polyharnstoffherstellung bekannt.

Als Verstärkungsmittel, sind die an sich bekannten, üblichen organischen und anorganischen Verstärkungsmittel oder Beschwerungsmittel mit einem Teilchendurchmesser von größer 100 µm zu verstehen. Dabei wird als Teilchendurchmesser die längste Achse verstanden. Im Fall von gehackten Glasfasern beispielsweise wäre unter "Teilchendurchmesser" die Länge der Faser zu verstehen. Im Einzelnen seien beispielhaft genannt: anorganische Füllstoffe, wie silikatische Mineralien, beispielsweise Schichtsilikate, wie Antigorit, Bentonit, Serpentin, Hornblenden, Amphibole, Chrisotil und Talkum, Metalloxide, wie Kaolin, Aluminiumoxide, Titanoxide, Zinkoxid und Eisenoxide, Metallsalze wie Kreide und Schwerspat, und anorganische Pigmente, wie Cadmiumsulfid, Zinksulfid sowie Glas u.a. Vorzugsweise verwendet werden Kaolin (China Clay), Aluminiumsilikat und Copräzipitate aus Bariumsulfat und Aluminiumsilikat und Glasfasern. Als organische Füllstoffe kommen beispielsweise in Betracht: Ruß, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Verstärkungsmittel können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (e), zugegeben.

Zur Herstellung der erfindungsgemäßen Polyharnstoffelastomere werden die Komponenten (a) bis (e) vorzugsweise bei Temperaturen von 10 bis 90 °C besonders bevorzugt 15 bis 70 °C und insbesondere bei 20 bis 50 °C vermischt. Diese Mischung wird dann, vorzugsweise als Beschichtung auf einen Gegenstand aufgebracht und zum Polyharnstoffelastomer ausgehärtet. Dazu können auch die Komponenten (b) und, falls vorhanden, (c) bis (e) zu einer Polyolkomponente vermischt werden, welche dann mit der Isocyanatkomponente (a) vermischt wird. Dabei werden die Mischungsverhältnisse so gewählt, dass das ÄquivalenzVerhältnis von NCO-Gruppen der Polyisocyanate (a) zur Summe der reaktiven Wasserstoffatome der Komponenten (b) und gegebenenfalls (c) und (d) 0,9 bis 1,2 : 1, vorzugsweise 1,0 bis 1,15 : 1 beträgt. Ein Verhältnis von 1:1 entspricht dabei einem Isocyanatindex von 100.

Die Dicke der Polyharnstoffelastomerbeschichtung beträgt dabei vorzugsweise 0,01 mm bis 20 cm, vorzugsweise 0,1 mm bis 5 cm und besonders bevorzugt 0,5 mm bis 10 mm.

Weitere, nicht zwingend erforderliche Formulierungsbestandteile sind beispielsweise - Verdünner, zumeist Reaktivverdünner, die, wenn angewendet, in der Regel der Isocyanatkomponente beigefügt werden. Beispiele für Reaktivverdünner der Isocyanatkomponente sind Alkylencarbonate. Allerdings kann die Zugabe von Reaktivverdünnern zu einer Verschlechterung der mechanischen Eigenschaften und der Alterungsbeständigkeit des Polyharnstoff Sprühelastomers führen.

Die Komponente b) kann weiterhin insbesondere Abriebverbesserer enthalten. Als Abriebverbesserer werden vorzugsweise mit Silikon modifizierte Alkohole, insbesondere Glykole, zum Einsatz.

Das System wird in der Regel durch Sprühen appliziert, wobei die Komponenten unter hohem Druck und bei erhöhter Temperatur vor ihrem Austrag aus der Sprühpistole in deren Mischkopf vermischt und so zur Reaktion gebracht werden. Alternativ können auch die Komponenten einzeln auf die zu beschichtende Oberfläche aufgetragen werden, wobei die Vermischung durch das spontane Vermischen der Tröpfchen erfolgt. Die Reaktionszeit beträgt dabei üblicherweise nur wenige Sekunden. Dabei wird im Rahmen der Erfindung die Mischung der Komponenten (a) bis (e) bei Reaktionsumsätzen kleiner 90 %, bezogen auf die Isocyanatgruppen, als Reaktionsmischung bezeichnet.

Das volumetrische Verhältnis, in welchem Polyisocyanat und Aminkomponente versprüht werden, ist bevorzugt 1 : 1, kann aber auch von 30 : 70 bis zu 70 : 30 Volumen-%, bevorzugt aber bis zu 1,1 : 1 betragen.

Die besprühte Oberfläche kann, insbesondere wenn sie feucht ist, zur Verbesserung der Adhäsion mit einen Primer vorbehandelt sein. Der Adhäsionsverbesserer kann, ebenfalls insbesondere für die Haftung auf feuchtem Untergrund, auch der Isocyanat- beziehungsweise bevorzugt der Polyamin-Komponente zugegeben werden.

Beispiele für Primer sind Siloxane und funktionalisierte Siloxane. Insbesondere zu nennen sind Epoxy- Amino- bzw. Vinyl-Alkoxysilane. Weitere Beispiele für kommerziell erhältliche Primer sind Titanate wie Neopentyl(dially)oxytri(m-amino)phenyl-Titanat oder Zirkonate wie Neopentyl(diallyl)oxy tri(m-ethylendiamino)ethyl-Zirkonat. Weitere mögliche Primer sind 1K-bzw. 2K-Polyurethansysteme, Polyvinylamine, Polyacrylate bzw. Epoxidharze. Die Primer können vor der Applikation in Wasser oder anderen Lösungsmitteln dispergiert, emulgiert oder gelöst werden.

Dabei kann jedwede Oberfläche besprüht werden. Vorzugsweise ist die zu besprühende Oberfläche eine mineralische Oberfläche, wie beispielsweise Beton, oder eine metallische Oberfläche, wie beispielsweise Stahl.

Ein weiterer Gegenstand der Erfindung ist eine Polyharnstoffelastomer-Beschichtung, erhältlich nach einem erfindungsgemäßen Verfahren.

Vorzugsweise wird ein erfindungsgemäßes Polyharnstoffelastomer zur Beschichtung von Oberflächen eingesetzt, die vor mechanischer und chemischer Belastung geschützt werden sollen, wie beispielsweise Industriefußböden, Betonreparatur und Wasserschutz, beispielsweise für Dach- und, Parkdeckbeschichtungen sowie Brücken- und Tunnelreparaturen, sogenanntes "Secondary Containments", wie Auffangbecken von Chemikalien-, Abwasser- oder Öltanks, für Gefahrgutladezonen, als Korrosionsschutz, beispielsweise für Ladeflächen von Frachtschiffen, LKWs, Pick-Ups und Eisenbahnwaggons oder sogenanntes "Primary Containment", wie Abwasserschächte, Kläranlagen oder Reaktoren, beispielsweise Bioreaktoren. Insbesondere werden die erfindungsgemäßen Polyharnstoffelastomere zur Beschichtung von Reaktoren, wie Bioreaktoren, von Auffangbecken für Chemikalien, insbesondere saure Chemikalien, oder in Kontakt mit Abwasser, beispielsweise in Kläranlagen oder Abwasserrohren eingesetzt.

Die erhaltenen Polyharnstoffelastomere sind besonders chemikalienbeständig. Dies zeigt sich insbesondere durch sehr gute mechanische Eigenschaften nach Lagerung in Säuren.

Ein weiterer Vorteil der vorliegenden Erfindung ist die leichte Verarbeitbarkeit der Komponenten, insbesondere aufgrund der geringen Viskosität der dispergierte Füllstoffpartikel enthaltenden Polyamine (b) gegenüber den Ausgangsverbindungen zur Herstellung bekannter, chemikalienbeständiger Polyharnstoffe. Die erhaltenen erfindungsgemäßen Polyharnstoff-Elastomere weisen darüber hinaus sehr gute mechanischem Eigenscgaften, wie eine hohe Härte von mindestens 80 shore A, vorzugsweise mindestens 85 shore A und insbesondere mindestens 40 shore D auf.

Im Folgenden wird die Erfindung anhand von Beispielen verdeutlicht.

### Beispiele

Die Viskositäten wurden gemäß ASTM D7042 gemessen; die OH-Zahlen wurden gemäß DIN 53240 bestimmt; die Aminzahlen wurden gemäß DIN 13717 bestimmt.
Die Teilchengrößenverteilungen wurden mit einem Malvern Mastersizer gemessen. Die einzelnen Werte bedeuten:
D10: 10% vom Gesamtvolumen der Partikel haben einen Durchmesser, der kleiner ist als der angegebene Wert
D50: 50% vom Gesamtvolumen der Partikel haben einen Durchmesser, der kleiner ist als der angegebene Wert
D90: 90% vom Gesamtvolumen der Partikel haben einen Durchmesser, der kleiner ist als der angegebene Wert

Mastersizer (Messung der Partikelgrößenverteilung): Mastersizer 2000 (Prinzip der statischen Lichtstreuung); Proben wurden mit Isopropanol auf die zur Messung erforderliche Konzentration verdünnt.

### Ausgangsmaterialien:

Polyetheramin 1: aliphatisches primäres aminterminiertes Polyoxypropylendiamin mit einer Aminzahl von 56,7 mg KOH/g.
Polyetheramin 2: aliphatisches primäres aminterminiertes Polyoxypropylendiamin mit einer Aminzahl von 249,5 mg KOH/g.
Kettenverlängerer: 80:20 Gew.-%-Mischung von 3,5-Diethyl-2,4-toluoldiamin und 3,5-Diethyl-2,6-toluoldiamin.
Isocyanat: 50:50-Isomerengemisch aus 4,4'- und 2,4'-MDI.
Makromer: Sechsfunktionelles Polyetherol mit einer Hydroxyzahl von 18,4 mg KOH/g, umgesetzt mit TMI® (Meta).
TMI® (Meta) = ungesättigtes aliphatisches Isocyanat der Firma Cytec Industries
DBTL: Dibutylzinndilaurat, TRIGON Chemie GmbH
Vazo® 64 = Radikalinitiator der Firma DuPont
Beispiel 1: Herstellung des Polymeren-polyetheramins

663,4 g Polyetheramin 1 und 5,4 g Makromer wurden in einen gerührten Autoklaven vorgelegt und auf 125°C erwärmt. Anschließend wurden 363,2 g Acrylnitril, 726,5 g Styrol, 11,4 g Dodecanthiol, 6,5 g Vazo® 64 und 60 g Makromer gelöst in 663,4 g Polyetheramin 1 innerhalb von 150 Minuten zur Reaktionsmischung zudosiert. Nach einer Abreaktionszeit von 15 Minuten wurde das Produkt durch Anlegen eines Vakuums bei 7 mbar vom Restmonomer befreit. Es wurde ein Polymer-Polyetheramin erhalten, das eine Viskosität von 2832 mPas bei 25 °C und Aminzahl von 29,8 mg KOH/g aufwies. Das Ergebnis der Teilchengrößenverteilung: D10 = 0,328 µm, D50 = 0,662 µm und D90 = 0,999 µm.

### Herstellung von Polyharnstoff-Elastomeren

Als Isocyanatkomponente für die Herstellung des Polyharnstoff-Elastomeren wurde ein Isocyanatprepolymer aus Isocyanat (51,6 Gew.-%, bezogen auf das Gesamtgewicht des Isocyanatpreoplymers) und einem difunktionellen Polypropylenglykol (48,4 Gew.-%, bezogen auf das Gesamtgewicht des Isocyanatpreoplymers) mit einer OH-Zahl von 56 mg KOH/g hergestellt. Die erhaltenen Isocyanatprepolymere haben einen NCO-Gehalt von 15,0 ± 0,1 % und eine Viskosität bei 25°C von 800 ± 100 mPas.

Die Ausgangssubstanzen gemäß Tabelle 1 wurden auf einer kommerziell erhältlichen Isotherm PSM 3000 Sprühmaschine bei einer Temperatur von 60 bis 80°C und einem Druck von 150 bis 180 bar auf Teflonplatten (60 cm * 60 cm) zu einem Polyharnstoff-Elastomer mit einer Schichtdicke von ca. 20 mm versprüht.

Die Reaktivitäten der Styrolacrylnitril-gefüllte Polyharnstoff-Systeme (Gel- und Klebfrei-Zeiten) sind vergleichbar mit dem Referenz-System. Die charakteristischen mechanischen Eigenschaften der erhaltenen Polyharnstoffelastomere sind ebenfalls in Tabelle 1 zusammengestellt.

**Tabelle 1**

| Formulierungen | Referenz | Polyharnstoff 1 | Polyharnstoff 2 |
|---|---|---|---|
| Iso-Prepolymer | 110 | 93 | 84 |
| Polyetheramin 1 | 63.1 | 34.6 | - |
| Polymer-polyetheramin | - | 34.6 | 72.8 |
| Polyetheramin 2 | 17 | 14.2 | 11.2 |
| Kettenverlängerer | 19.9 | 16.5 | 16.0 |
| Kennzahl | 105 | 105 | 105 |
| Berechnete SAN-Anteil | 0 % | 9 % | 19 % |
| Viskosität Polyolkomp. bei 25 °C [mPa.s] | 230 | 850 | 1200 |

| Mechanische Eigenschaften | | | |
|---|---|---|---|
| Shore-Härte A / D (DIN 53505) | 90 / 41 | 91 / 43 | 95 / 48 |
| Dichte [g/cm³] (DIN 53479) | 0.964 | 0.975 | 1.019 |
| Zugfestigkeit [MPa] (DIN 53504) | 21 | 19 | 21 |
| Reißdehnung [%] (DIN 53504) | 480 | 470 | 350 |
| Weiterreißwiderstand [N/mm] (DIN 53515) | 56 | 49 | 54 |
| Abrieb [mm³] (DIN 53516) | 224 | 184 | 162 |

Die erfindungsgemäß hergestellten Polyharnstoff-Elastomere 1 und 2 zeigen mit steigendem Füllstoffanteil deutlich verbesserte Abriebwerte im Vergleich zur Referenz ohne Füllstoffanteil.

Die Säure- und Oxidationsbeständigkeiten der gesprühten Platten sind in den Tabellen 2, 3, 4 und 5 zusammengestellt. Dazu wurden die hergestellten Proben die angegebene Zeit bei 23 °C in der jeweils angegebenen Säure gelagert. SAN-gefüllte Polyharnstoffe zeigen eine deutliche Verbesserung der Beständigkeiten in Salpetersäure und Schwefelsäure. Die stark oxidative Wirkung der Salpetersäure wird mit zunehmendem Anteil Styrolacrynitrilpartikeln abgeschwächt. In der 10%-igen Salpetersäure-Lösung ist für die Beispiele 1 und 2 auch nach mehreren Wochen fast keine äußerliche Veränderung zu beobachten, während das das Beispiel gemäß Referenz 1 sich nach wenigen Tagen schwarz verfärbt. Auch in konzentrierter Salpetersäure (68%) zeigen die erfindungsgemäßen Beispiele Polyharnstoff-Elastomer 1 und Polyharnstoff-Elastomer 2 im Vergleich zur Referenz deutlich verringerten Abbau.

**Tabelle 2**

| HNO₃ 10% | 0 Tage | | 14 Tage | | 28 Tage | | 42 Tage | |
|---|---|---|---|---|---|---|---|---|
| | Zugf. Mpa | Dehn. % | Zugf. Mpa | Dehn. % | Zugf. Mpa | Dehn. % | Zugf. Mpa | Dehn. % |
| Referenz | 22 | 480 | 6 | 350 | zerstört | | ---- | |
| Polyharnstoff 1 | 20 | 470 | 8 | 350 | 8 | 350 | nicht messbar | |
| Polyharnstoff 2 | 21 | 350 | 12 | 300 | 13 | 300 | 12 | 310 |

**Tabelle 3**

| HNO₃ konz. 68% | 2 Stunden | 6 Stunden |
|---|---|---|
| Referenz | braun, teilweise gelöst | Prüfkörper gelöst |
| Polyharnstoff 1 | stark gelblich | braun, teilweise gelöst |
| Polyharnstoff 2 | klar | leicht gelblich |

**Tabelle 4**

| H₂SO₄ 20% | 0 Tage | | 14 Tage | | 28 Tage | |
|---|---|---|---|---|---|---|
| | Zugf. Mpa | Dehn. % | Zugf. Mpa | Dehn. % | Zugf. Mpa | Dehn. % |
| Referenz | 22 | 480 | 13 | 460 | 13 | 470 |
| Polyharnstoff 1 | 20 | 470 | 15 | 440 | 14 | 440 |
| Polyharnstoff 2 | 21 | 350 | 18 | 340 | 18 | 320 |

**Tabelle 5**

| HCl 10% | 0 Tage | | 14 Tage | | 28 Tage | |
|---|---|---|---|---|---|---|
| | Zugf. Mpa | Dehn. % | Zugf. Mpa | Dehn. % | Zugf. Mpa | Dehn. % |
| Referenz | 22 | 480 | 13 | 390 | 11 | 360 |
| Polyharnstoff 1 | 20 | 470 | 15 | 470 | 15 | 410 |
| Polyharnstoff 2 | 21 | 350 | 17 | 360 | 17 | 310 |

## Patentansprüche

1. Verfahren zur Beschichtung von Oberflächen mit einem Polyharnstoff-Elastomeren, bei dem man
a) Polyisocyanate, enthaltend 4,4'-Diphenylmethandiisocyanat und / oder 2,4' Diphenylmethandiisocyanat oder deren Prepolymere mit
b) Polyaminen, erhältlich durch katalytische Aminierung von Polyalkoholen,
c) gegebenenfalls Aminkettenverlängerer, enthaltend primäre- oder sekundäre Amingruppen,
d) gegebenenfalls Polyole und
e) gegebenenfalls Hilfs- und Zusatzstoffe,
zu einer Reaktionsmischung vermischt und die Reaktionsmischung auf die zu beschichtende Oberfläche aufträgt und aushärtet, wobei mindestens eine der Komponenten (a) bis (d) dispergierte Füllstoffpartikel enthält, erhältlich durch Polymerisation von Monomeren, ausgewählt aus der Gruppe, bestehend aus Styrol, Acrylnitril, Butadien, Isopren, 1,4-Pentadien, 1,6-Hexadien, 1,7-Octadien, Alpha-Methylstyrol, 2-Methylstyrol, 3-Methylstyrol, 4-Methylstyrol, 2,4-Dimethylstyrol, Ethylstyrol, Isopropylstyrol, Butylstyrol, Phenylstyrol, Cyclohexylstyrol, Benzylstyrol, Cyanostyrol, Nitrostyrol, N,N-Di-methylaminostyrol, Acetoxystyrol, Methyl-4-Vinylbenzoat, Phenoxystyrol, p-Vinylphenyoxid, Acrylnitril, Acrylsäure, Methacrylsäure, Methacrylnitril, Vinylmethylketon, Vinylethylketon, Vinylphenyketon, Vinylethylsulfon, N-methyl-N-vinylacetamid, N-vinylpyrrolidon, Vinylimidazol, Dinvinylsulfoxid, Divinylsulfon, Natrium-vinylsulfonat, Methylvinylsulfonat, N-Vinylpyrrol, Vinylphosphonat, Dimethylfumarat, Dimethylmaleat, Maleinsäure, Crotonsäure, Fumarsäure, Itaconsäure, Monomethylitaconat, Allylalkohol, Vinylpyridin und Mischungen zweier oder mehrerer dieser Monomere.

2. Verfahren nach Anspruch 1, **dadurch gekennzeichnet, dass** als Polyisocyanate (a) Polyisocyanatprepolymere eingesetzt werden.

3. Verfahren nach Anspruch 1 oder 2, **dadurch gekennzeichnet, dass** die Polyharnstoff-Elastomere einen Gehalt an Füllstoffpartikeln von 1 bis 30 Gew.-%, bezogen auf das Gesamtgewicht der Polyharnstoff-Elastomere, enthalten.

4. Verfahren nach einem der Ansprüche 1 bis 3, **dadurch gekennzeichnet, dass** der Anteil an Polyaminen, bezogen auf das Gesamtgewicht an Polyaminen (b) und Polyolen (d), mindestens 75 Gew.-% beträgt.

5. Verfahren nach einem der Ansprüche 1 bis 4, **dadurch gekennzeichnet, dass** die das Aufbringen auf die zu beschichtende Oberfläche durch Sprühen erfolgt.

6. Verfahren nach einem der Ansprüche 1 bis 5, **dadurch gekennzeichnet, dass** die zu beschichtenden Oberflächen ausgewählt sind aus der Gruppe, bestehend aus mineralischen Oberflächen oder metallischen Oberflächen

7. Verfahren nach Anspruch 6, **dadurch gekennzeichnet, dass** die zu beschichtenden Oberflächen ausgewählt sind aus der Gruppe bestehend aus Industriefußböden, Parkdecks, Dächern, Brücken, Tunnels, Auffangbecken für Chemikalien oder Abwasser, Öltanks, Gefahrgutladezonen, Ladeflächen von LKW's, Pick-Ups und Eisenbahnwagongs, Abwasserschächten, Kläranlagen und Reaktoren.

8. Verfahren nach einem der Ansprüche 1 bis 7, **dadurch gekennzeichnet, dass** die Füllstoffpartikel aus thermoplastischem Polymer in Form ihrer Schmelze in der Isocyanatkomponente und/oder dem Polyamin (b) dispergiert werden.

9. Verfahren nach einem der Ansprüche 1 bis 8, **dadurch gekennzeichnet, dass** die Füllstoffpartikel Polystyrolacrylnitril-Partikel sind.

10. Verfahren nach einem der Ansprüche 1 bis 9, **dadurch gekennzeichnet, dass** die Füllstoffpartikel gegenüber Isocyanat reaktive Gruppen aufweisen.

11. Verfahren nach einem der Ansprüche 1 bis 10, **dadurch gekennzeichnet, dass** die Polyamine (b) Polymerpolyamine enthalten.

12. Verfahren nach einem der Ansprüche 1 bis 11, **dadurch gekennzeichnet, dass** die Polyamine (b) Polymerpolyetheramine enthalten.

13. Polyharnstoff-Elastomer-Beschichtungen, erhältlich nach einem Verfahren der Ansprüche 1 bis 12.

14. Verwendung einer Polyharnstoff-Elastomer-Beschichtung nach Anspruch 13 als Beschichtung in Reaktoren, Auffangbecken für Chemikalien oder in Kontakt mit Abwasser.

## Claims

1. A process for coating surfaces with a polyurea elastomer, wherein
a) polyisocyanates comprising diphenylmethane 4,4'-diisocyanate and/or diphenylmethane 2,4'-diisocyanate or prepolymers thereof are mixed with
b) polyamines which can be obtained by catalytic amination of polyalcohols,
c) optionally amine chain extenders comprising primary or secondary amine groups,
d) optionally polyols and
e) optionally auxiliaries and additives
to form a reaction mixture and the reaction mixture is applied to the surface to be coated and cured, where at least one of the components (a) to (d) comprises dispersed filler particles obtainable by polymerization of monomers selected from the group consisting of styrene, acrylonitrile, butadiene, isoprene, 1,4-pentadiene, 1,6-hexadiene, 1,7-octadiene, alphamethylstyrene, 2-methylstyrene, 3-methylstyrene, 4-methylstyrene, 2,4-dimethylstyrene, ethylstyrene, isopropylstyrene, butylstyrene, phenylstyrene, cyclohexylstyrene, benzylstyrene, cyanostyrene, nitrostyrene, N,N-dimethylaminostyrene, acetoxystyrene, methyl 4-vinylbenzoate, phenoxystyrene, p-vinylphenyl oxide, acrylonitrile, acrylic acid, methacrylic acid, methacrylonitrile, vinyl methyl ketone, vinyl ethyl ketone, vinyl phenyl ketone, vinyl ethyl sulfone, N-methyl-N-vinylacetamide, N-vinylpyrrolidone, vinylimidazole, divinyl sulfoxide, divinyl sulfone, sodium vinylsulfonate, methyl vinylsulfonate, N-vinylpyrrole, vinyl phosphonate, dimethyl fumarate, dimethyl maleate, maleic acid, crotonic acid, fumaric acid, itaconic acid, monomethyl itaconate, allyl alcohol, vinylpyridine and mixtures of two or more of these monomers.

2. The process according to claim 1, wherein polyisocyanate prepolymers are used as polyisocyanates (a).

3. The process according to claim 1 or 2, wherein the polyurea elastomers have a content of filler particles of from 1 to 30% by weight, based on the total weight of the polyurea elastomers.

4. The process according to any of claims 1 to 3, wherein the proportion of polyamines, based on the total weight of polyamines (b) and polyols (d), is at least 75% by weight.

5. The process according to any of claims 1 to 4, wherein application to the surface to be coated is effected by spraying.

6. The process according to any of claims 1 to 5, wherein the surfaces to be coated are selected from the group consisting of mineral surfaces or metallic surfaces.

7. The process according to claim 6, wherein the surfaces to be coated are selected from the group consisting of industrial floors, parking decks, roofs, bridges, tunnels, collection basins for chemicals or wastewater, oil tanks, dangerous goods loading zones, loading areas of goods vehicles, pickups and railroad cars, wastewater shafts, water treatment plants and reactors.

8. The process according to any of claims 1 to 7, wherein the filler particles composed of thermoplastic polymer are dispersed in the form of their melt in the isocyanate component and/or in the polyamine (b).

9. The process according to any of claims 1 to 8, wherein the filler particles are polystyrene-acrylonitrile particles.

10. The process according to any of claims 1 to 9, wherein the filler particles have groups which are reactive toward isocyanate.

11. The process according to any of claims 1 to 10, wherein the polyamines (b) comprise polymer polyamines.

12. The process according to any of claims 1 to 11, wherein the polyamines (b) comprise polymer polyether amines.

13. Polyurea elastomer coatings obtainable by a process of claims 1 to 12.

14. The use of a polyurea elastomer coating according to claim 13 as coating in reactors, collection basins for chemicals or in contact with wastewater.

## Revendications

1. Procédé pour le revêtement de surfaces avec un élastomère polyurée, dans lequel on mélange
a) des polyisocyanates, contenant du diisocyanate de 4,4'-diphénylméthane et/ou du diisocyanate de 2,4'-diphénylméthane ou leurs prépolymères avec
b) des polyamines, pouvant être obtenues par amination catalytique de polyalcools,
c) éventuellement des prolongateurs de chaîne aminés, contenant des groupes amino primaires ou secondaires,
d) éventuellement des polyols et
e) éventuellement des adjuvants et additifs,
pour obtenir un mélange réactionnel et on applique et fait durcir le mélange réactionnel sur la surface à revêtir, au moins l'un des composants (a) à (d) contenant des particules de charge dispersées, pouvant être obtenues par polymérisation de monomères choisis dans le groupe constitué par le styrène, l'acrylonitrile, le butadiène, l'isoprène, le 1,4-pentadiène, le 1,6-hexadiène, le 1,7-octadiène, l'alpha-méthylstyrène, le 2-méthylstyrène, le 3-méthylstyrène, le 4-méthylstyrène, le 2,4-diméthylstyrène, l'éthylstyrène, l'isopropylstyrène, le butylstyrène, le phénylstyrène, le cyclohexylstyrène, le benzylstyrène, le cyanostyrène, le nitrostyrène, le N,N-diméthylaminostyrène, l'acétoxystyrène, le benzoate de méthyl-4-vinyle, le phénoxystyrène, l'oxyde de p-vinylphényle, l'acrylonitrile, l'acide acrylique, l'acide méthacrylique, le méthacrylonitrile, la vinylméthyl-cétone, la vinyléthylcétone, la vinylphénylcétone, la vinyléthylsulfone, le N-méthyl-N-vinylacétamide, la N-vinylpyrrolidone, le vinylimidazole, le divinyl-sulfoxyde, la divinylsulfone, le vinylsulfonate de sodium, le vinylsuifonate de méthyle, le N-vinylpyrrole, le phosphonate de vinyle, le fumarate de diméthyle, le maléate de diméthyle, l'acide maléique, l'acide crotonique, l'acide fumarique, l'acide itaconique, l'itaconate de monométhyle, l'alcool allylique, la vinylpyridine, et des mélanges de deux ou plus de deux de ces monomères.

2. Procédé selon la revendication 1, **caractérisé en ce qu'**en tant que polyisocyanates (a) on utilise des prépolymères polyisocyanate.

3. Procédé selon la revendication 1 ou 2, **caractérisé en ce que** les élastomères polyurée ont une teneur en particules de charge de 1 à 30 % en poids, par rapport au poids total des élastomères polyurée.

4. Procédé selon l'une quelconque des revendications 1 à 3, **caractérisé en ce que** la proportion des polyamines, par rapport au poids total des polyamines (b) et polyols (d) vaut au moins 75 % en poids.

5. Procédé selon l'une quelconque des revendications 1 à 4, **caractérisé en ce que** l'application sur la surface à revêtir s'effectue par pulvérisation.

6. Procédé selon l'une quelconque des revendications 1 à 5, **caractérisé en ce que** les surfaces à revêtir sont choisies dans le groupe constitué par des surfaces minérales ou des surfaces métalliques.

7. Procédé selon la revendication 6, **caractérisé en ce que** les surfaces à revêtir sont choisies dans le groupe constitué par des planchers industriels, des parkings, des toitures, des ponts, des tunnels, des bassins collecteurs pour produits chimiques ou eaux résiduaires, des réservoirs de produits pétroliers, des zones de chargement de marchandises dangereuses, des aires de chargement de camions, camionnettes et wagons de chemins de fer, des puits d'accès à des égouts, des stations d'épuration et des réacteurs.

8. Procédé selon l'une quelconque des revendications 1 à 7, **caractérisé en ce qu'**on disperse dans le composant isocyanate et/ou la polyamine (b) les particules de charge à base de polymère thermoplastique, sous forme de leur masse fondue.

9. Procédé selon l'une quelconque des revendications 1 à 8, **caractérisé en ce que** les particules de charge sont des particules de poly(styrène-acrylonitrile).

10. Procédé selon l'une quelconque des revendications 1 à 9, **caractérisé en ce que** les particules de charge comportent des groupes réactifs vis-à-vis d'isocyanate.

11. Procédé selon l'une quelconque des revendications 1 à 10, **caractérisé en ce que** les polyamines (b) contiennent des polyamines polymères.

12. Procédé selon l'une quelconque des revendications 1 à 11, **caractérisé en ce que** les polyamines (b) contiennent des polyétheramines polymères.

13. Revêtements à base d'élastomères polyurée, pouvant être obtenus selon un procédé des revendications 1 à 12.

14. Utilisation d'un revêtement à base d'élastomères polyurée selon la revendication 13, en tant que revêtement dans des réacteurs, des bassins collecteurs pour produits chimiques ou en contact avec des eaux résiduaires.
